# EUROPÄISCHE PATENTANMELDUNG

(11) **EP 1 936 410 A1**
(43) Veröffentlichungstag der Anmeldung: **25.06.2008**
(21) Anmeldenummer: 07112628.8
(22) Anmeldetag: 17.07.2007
(51) Int. Cl.: G02B 6/00

(54) **Lichtleitplatte**

(30) Priorität: 22.12.2006 DE 202006019409 U
(71) Anmelder: Kun Dian Photoelectric Enterprise Co., Lujhou City T'ai pei 247 (TW)
(72) Erfinder: LEE, Cheng Sheng, Yen Shui Town (TW); LIN, Fu Nan, Pa-Chiao City (TW)
(74) Vertreter: Viering, Jentschura & Partner

(57) **Zusammenfassung**

Die Erfindung betrifft eine Lichtleitplatte, die aus einem Hauptkörper (1) besteht, der aus lichtdurchläßigem Material hergestellt ist und an der Frontseite eine lichtdurchläßige Schicht (11) und an der Rückseite eine Reflexionsschicht (12) umfaßt, die einteilig ausgebildet sind. An der Reflexionsschicht (12) sind mehrere Lichtblenden (13, 14) vorgesehen, die in die lichtdurchlässige Schicht (11) ragen. Dadurch kann die Lichtleitplatte mit einer seitlichen Lichtquellenvorrichtung eine dünne Beleuchtungsvorrichtung bilden, die ein Licht mit höherer Homogenität und Helligkeit erzeugt und einen größeren Beleuchtungsbereich aufweist.

## Beschreibung

Die Erfindung betrifft eine Lichtleitplatte, die an der Frontseite eine lichtdurchlässige Schicht und an der Rückseite eine Reflexionsschicht umfasst und mit einer Lichtquellenvorrichtung eine dünne Beleuchtungsvorrichtung bilden kann, deren Licht eine höhere Homogenität und Helligkeit sowie einen größeren Beleuchtungsbereich aufweist.

Die Beleuchtungsvorrichtung dient zur Erzeugung eines Lichtes oder einer optischen Wirkung.

Die Beleuchtungsvorrichtung enthält eine Glühlampe und eine Leuchtstofflampe. Diese Lampen haben einen hohen Stromverbrauch und erzeugen eine hohe Betriebswärme. Zudem kann das Licht dieser Lampen den Augen schaden.

Die Leuchtdiode hat im Vergleich mit den oben genannten Lampen einen niedrigeren Stromverbrauch und erzeugt keine Betriebswärme. Jedoch weist die Leuchtdiode einen kleineren Beleuchtungsbereich auf.

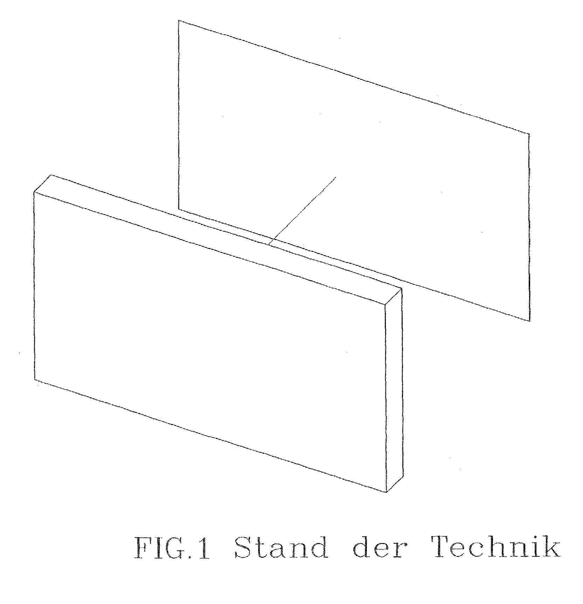

Um den Beleuchtungsbereich zu vergrößern, werden üblicherweise mehrere Leuchtdioden verwendet, wodurch die Herstellungskosten erhöht werden. Es ist auch möglich, eine Lichtleitplatte zu verwenden, die eine Reflexionsschicht aufweist und mit seitlichen Leuchtdioden eine Hintergrundbeleuchtung bilden kann. Figur 1 zeigt eine herkömmliche Lichtleitplatte, die mit einer Reflexionsschicht versehen ist. Da die Reflexionsschicht separat ausgebildet ist, kann an der Verbindungsstelle ein Spalt auftreten, was zu einem Lichtverlust führen kann.

Der Erfindung liegt die Aufgabe zugrunde, eine Lichtleitplatte zu schaffen, die mit einer Lichtquellenvorrichtung eine Beleuchtungsvorrichtung bilden kann, die ein höhere Helligkeit, einen niedrigeren Stromverbrauch hat und keine Betriebswärme erzeugt.

Im Folgenden werden Ausführungsformen der Erfindung anhand der Zeichnung im Detail beschrieben. In der Zeichnung zeigt:
- Figur 1: eine Explosionsdarstellung der herkömmlichen Lösung,
- Figur 2: eine perspektivische Darstellung der erfindungsgemäßen Lichtleitplatte,
- Figur 3: eine Schnittdarstellung der erfindungsgemäßen Lichtleitplatte,
- Figur 4: eine Schnittdarstellung der erfindungsgemäßen Lichtleitplatte mit einer Punktmatrix,
- Figur 5: eine perspektivische Darstellung der erfindungsgemäßen Lichtleitplatte mit Lichtblenden,
- Figur 6: eine Schnittdarstellung der erfindungsgemäßen Lichtleitplatte mit Lichtblenden,
- Figur 7: eine Explosionsdarstellung eines weiteren Ausführungsbeispiels der Erfindung,
- Figur 8: eine Darstellung der erfindungsgemäßen Lichtleitplattemit einem konvexen Bereich,
- Figur 9: eine Darstellung der erfindungsgemäßen Lichtleitplatte mit Ausnehmungen.

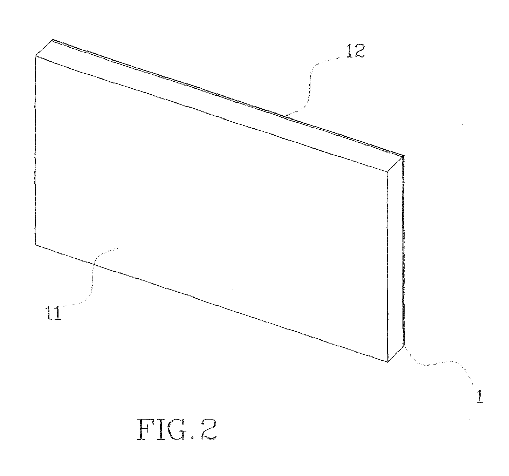

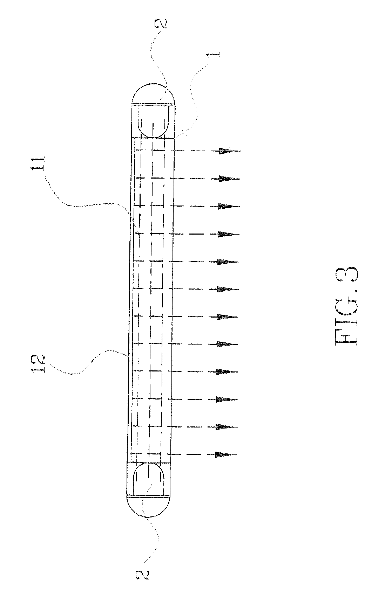

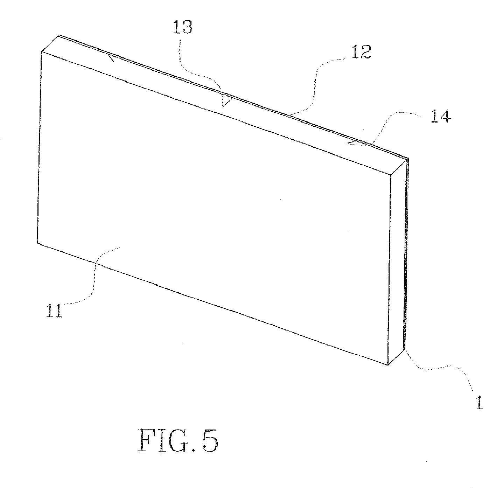

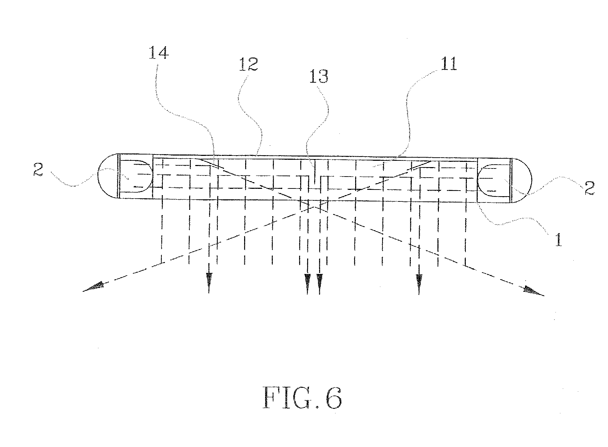

Wie aus den Figuren 2 bis 9 ersichtlich ist, weist die erfindungsgemäße Lichtleitplatte auf,

einen Hauptkörper 1, der aus lichtdurchlässigem Material hergestellt ist und an der Frontseite eine lichtdurchlässige Schicht 11 und an der Rückseite eine Reflexionsschicht 12 umfasst, die einteilig ausgebildet sind.

Die Lichtleitplatte bildet mit einer seitlichen Lichtquellenvorrichtung eine dünne Beleuchtungsvorrichtung. Nach dem Einschalten der seitlichen Lichtquellenvorrichtung 2 kann das Licht direkt auf die Reflexionsschicht 12 strahlen und von dieser dann durch die vordere lichtdurchlässige Schicht 11 ausgestrahlt werden.

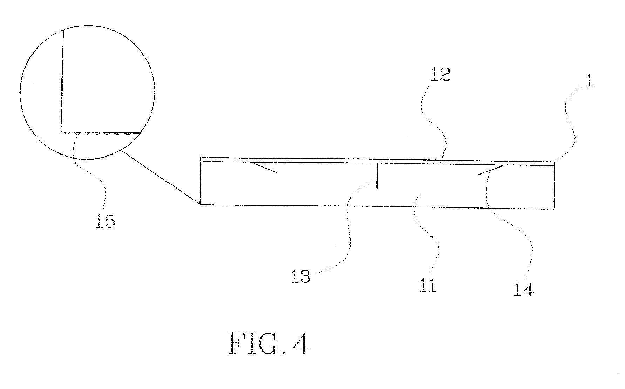

Wie aus den Figuren 4 bis 6 ersichtlich ist, kann die Oberfläche des Hauptkörpers 1 mit einer Punktmatrix 15 versehen sein, um die Lichtwirkung zu erhöhen. Zudem können an der Reflexionsschicht 12 mehrere Lichtblenden 13, 14 vorgesehen sein, die in die lichtdurchlässige Schicht 11 ragen. Die Lichtblende 13 ist länger, liegt vertikal in der Mitte der lichtdurchlässigen Schicht 11 und hat eine Höhe, die nicht größer ist als 3/4 der Dicke der lichtdurchlässigen Schicht 11. Die Lichtblenden 14 an den beiden Seiten sind kürzer und neigen sich nach innen.

Nach dem Einschalten der seitlichen Lichtquellenvorrichtung 2 wird das reflektierte Licht von den Lichtblenden 13 und 14 abgelenkt, so dass das ausgestrahlte Licht eine höhere Homogenität und Helligkeit aufweist. Zudem kann der Ablenkungswinkel und somit der Beleuchtungsbereich vergrößert werden.

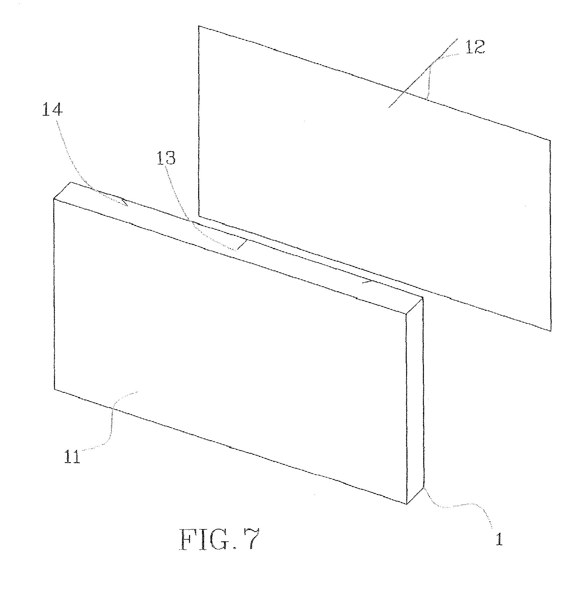

Wie aus Figur 7 ersichtlich ist, ist es auch möglich, zunächst einen Hauptkörper 1 mit einer lichtdurchlässigen Schicht 11 herzustellen und die Lichtblenden 13, 14 in die lichtdurchlässige Schicht 11 einzubetten. Danach wird die Reflexionsschicht 12 auf den Hauptkörper 1 aufgebracht.

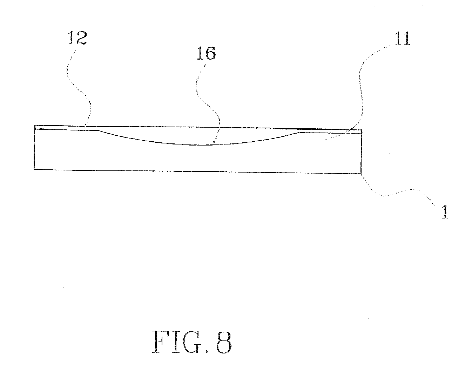

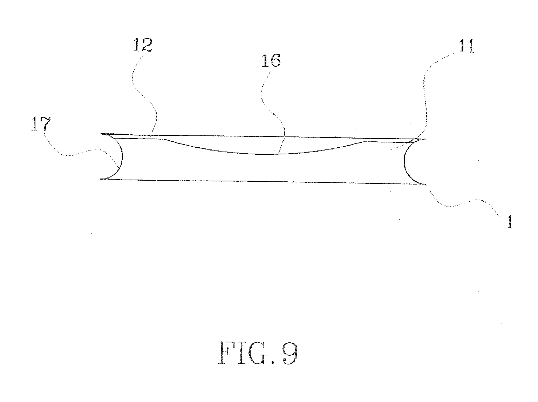

Wie aus Figur 8 ersichtlich ist, kann die Reflexionsschicht 12 des Hauptkörpers 1 in der Mitte einen konvexen Bereich 16 aufweisen, um das Licht abzulenken, wodurch der Beleuchtungsbereich auch vergrößert werden kann. Wie aus Figur 9 ersichtlich ist, kann der Hauptkörper 1 an den beiden Seiten jeweils eine Ausnehmung 17 aufweisen, wodurch die Lichtquellenvorrichtung 2 der Lichtleitplatte näher kommen kann.

Zusammenfassend ist festzustellen, dass die Erfindung das Licht direkt nach vorne reflektieren kann, wodurch der Beleuchtungsbereich wesentlich vergrößert wird.

### Bezugszeichenliste

- 1: Hauptkörper
- 11: Lichtdurchlässige Schicht
- 12: Reflexionsschicht
- 13: Lichtblende
- 14: Lichtblende
- 15: Punktmatrix
- 16: konvexer Bereich
- 17: Ausnehmung
- 2: Lichtquellenvorrichtung

## Patentansprüche

1. Lichtleitplatte, mit einem Hauptkörper (1), der aus lichtdurchlässigem Material hergestellt ist und an der Frontseite eine lichtdurchlässige Schicht (11) und an der Rückseite eine Reflexionsschicht (12) umfasst, die einteilig ausgebildet sind, wobei die Lichtleitplatte mit einer seitlichen Lichtquellen vorrichtung eine dünne Beleuchtungsvorrichtung bilden kann, die ein Licht mit höherer Homogenität und Helligkeit erzeugt und einen größeren Beleuchtungsbereich aufweist.

2. Lichtleitplatte nach Anspruch 1, **dadurch gekennzeichnet, dass** an der Reflexionsschicht (12) mehrere Lichtblenden (13, 14) vorgesehen sind, die in die lichtdurchlässige Schicht (11) ragen.

3. Lichtleitplatte, mit
einem Hauptkörper (1), der eine lichtdurchlässige Schicht (11) umfasst, in der mehrere Lichtblenden (13, 14) vorgesehen sind, und
einer Reflexionsschicht (12), die an der Rückseite des Hauptkörpers (1) angeordnet ist, wodurch
die Lichtleitplatte mit einer seitlichen Lichtquellenvorrichtung eine dünne Beleuchtungsvorrichtung bilden kann, die ein Licht mit höherer Homogenität und Helligkeit erzeugt und einen größeren Beleuchtungsbereich aufweist.

4. Lichtleitplatte nach Anspruch 2 oder 3, **dadurch gekennzeichnet, dass** eine Lichtblende (13) länger ist, vertikal in der Mitte der lichtdurchlässigen Schicht (11) liegt und eine Höhe hat, die nicht größer ist als 3/4 der Dicke der lichtdurchlässigen Schicht 11, und die Lichtblenden (14) an den beiden Seiten, kürzer sind und sich nach innen neigen.

5. Lichtleitplatte nach Anspruch 2 oder 3, **dadurch gekennzeichnet, dass** die Oberfläche des Hauptkörpers (1) mit einer Punktmatrix (15) versehen ist.

6. Lichtleitplatte nach Anspruch 2 oder 3, **dadurch gekennzeichnet, dass** der Hauptkörper (1) an den beiden Seiten jeweils eine Ausnehmung (17) aufweist.

7. Lichtleitplatte nach Anspruch 1, **dadurch gekennzeichnet, dass** die Reflexionsschicht (12) des Hauptkörpers (1) in der Mitte einen konvexen Bereich (16) aufweist.
